# EUROPEAN PATENT SPECIFICATION

(11) **EP 4 159 929 B1**
(45) Date of publication and mention of the grant of the patent: **12.11.2025**
(21) Application number: 21811820.6
(22) Date of filing: 28.05.2021
(51) Int. Cl.: E02F 9/00, E02F 9/20

(54) **EXCAVATOR**
BAGGER
EXCAVATRICE

(30) Priority: 29.05.2020 JP 2020094927
(43) Date of publication of application: 05.04.2023
(73) Proprietor: Sumitomo Construction Machinery Co., Ltd., Tokyo 141-6025 (JP)
(72) Inventor: MATSUHASHI, Yuiki, Chiba-shi, Chiba 263-0001 (JP)
(74) Representative: Walcher, Armin
(86) International application number: PCT/JP2021/020379
(87) International publication number: WO 2021/241727

(56) References cited:
- EP-A1- 1 837 509
- WO-A1-2017/164175
- JP-A- 2011 236 759
- JP-A- 2015 090 080
- KR-A- 20140 083 149
- US-A1- 2016 237 653

## Description

### [Technical Field]

The present invention relates to an excavator.

### [Background Art]

Conventionally, excavators that determine, based on the pressure of hydraulic oil in the arm cylinder, whether an arm closing operation is a high-load operation in excavation work, etc., or a low-load operation in leveling work, etc., are known (see Patent Document 1).

Moreover, it is known that an operator can manually input a desired RPM of an engine (Patent Document 2).

### [Citation List]

### [Patent Document]

[Patent Document 1]
   International Publication No. 2017/164175
[Patent Document 2]
   Korean Publication No. KR 2014 0083149 A

### [Summary of Invention]

### [Technical Problem]

However, Patent Document 1 does not mention energy saving when a low-load operation is performed.

Therefore, it is desirable to reduce wasteful energy consumption when a low-load operation is performed.

### [Solution to Problem]

The aforementioned problem is solved by an excavator according to claim 1.

According to an embodiment of the present invention, there is provided an excavator including a lower traveling body; an upper turning body turnably mounted to the lower traveling body; an attachment that is attached to the upper turning body; and a power engine that is mounted to the upper turning body, wherein before a low-load operation by the attachment is started, a rotation speed of the power engine is reduced.

### [Advantageous Effects of Invention]

According to one embodiment of the present invention, the excavator can reduce wasteful energy consumption when low-load operations are performed.

### [Brief Description of Drawings]

FIG. 1 is a side view of an excavator according to an embodiment of the present invention;
FIG. 2 illustrates an example of the configuration of a hydraulic system mounted on the excavator in FIG. 1;
FIG. 3 is a flowchart of an example of a rotation speed reduction process;
FIG. 4 illustrates the time transition of a target rotation speed, a boom raising pilot pressure, and a boom lowering pilot pressure when the rotation speed reduction process of FIG. 3 is performed;
FIG. 5 is a flowchart of another example of a rotation speed reduction process;
FIG. 6 illustrates the time transition of a target rotation speed, a boom raising pilot pressure, and a boom lowering pilot pressure when the rotation speed reduction process of FIG. 5 is performed;
FIG. 7 illustrates an example of the configuration of an electric operation system; and
FIG. 8 is a schematic diagram illustrating an example of a work system.

### [Description of Embodiments]

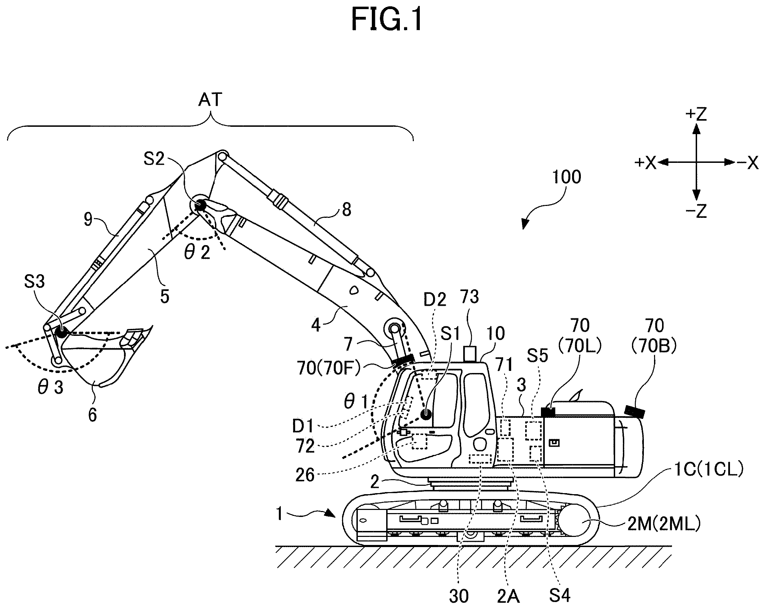

First, an excavator 100 as an excavator according to an embodiment of the present invention is described with reference to FIG. 1. FIG. 1 is a side view of the excavator 100.

In the present embodiment, a lower traveling body 1 of the excavator 100 includes a crawler 1C. The crawler 1C is driven by a traveling hydraulic motor 2M as a traveling actuator mounted on the lower traveling body 1. Specifically, the crawler 1C includes a left crawler 1CL and a right crawler (not visible in FIG. 1.). The left crawler 1CL is driven by a left traveling hydraulic motor 2ML and the right crawler is driven by a right traveling hydraulic motor (not visible in FIG. 1.).

An upper turning body 3 is mounted on the lower traveling body 1 so as to be turnable via a turning mechanism 2. The turning mechanism 2 is driven by a turning hydraulic motor 2A as a turning actuator mounted on the upper turning body 3.

The upper turning body 3 has a boom 4 attached thereto. An arm 5 is attached to the tip of the boom 4, and a bucket 6 as an end attachment is attached to the tip of the arm 5. The boom 4, the arm 5, and the bucket 6 constitute an excavation attachment AT, which is an example of an attachment. Further, the boom 4 is driven by a boom cylinder 7, the arm 5 is driven by an arm cylinder 8, and the bucket 6 is driven by a bucket cylinder 9. The boom cylinder 7, the arm cylinder 8, and the bucket cylinder 9 constitute an attachment actuator.

The boom 4 is pivotally mounted to the center of the front of the upper turning body 3. The boom 4 has a boom angle sensor S1 attached thereto. The boom angle sensor S1 can detect the boom angle θ1, which is the turning angle of the boom 4. The boom angle θ1 is, for example, the rising angle from the state in which the boom 4 is lowered the most. Therefore, the boom angle θ1 is at maximum when the boom 4 is raised the most.

The arm 5 is supported by the boom 4 so as to pivot upward and downward. An arm angle sensor S2 is attached to the arm 5. The arm angle sensor S2 can detect the arm angle θ2, which is the turning angle of the arm 5. The arm angle θ2 is, for example, the opening angle from the most closed state of the arm 5. Therefore, the arm angle θ2 is at maximum when the arm 5 is fully opened.

The bucket 6 is supported by the arm 5 so as to pivot upward and downward. A bucket angle sensor S3 is attached to the bucket 6. The bucket angle sensor S3 can detect the bucket angle θ3, which is the turning angle of the bucket 6. The bucket angle θ3 is the opening angle from the most closed state of the bucket 6. Therefore, the bucket angle θ3 is at maximum when the bucket 6 is opened the most.

In the embodiment of FIG. 1, each of the boom angle sensor S1, the arm angle sensor S2, and the bucket angle sensor S3 is configured by a combination of an acceleration sensor and a gyro sensor. However, each of the boom angle sensor S1, the arm angle sensor S2, and the bucket angle sensor S3 may be configured by only an acceleration sensor. The boom angle sensor S1 may be a stroke sensor, a rotary encoder, a potentiometer, an inertial measurement device, etc., attached to the boom cylinder 7. The same applies to the arm angle sensor S2 and the bucket angle sensor S3.

The posture of the excavation attachment AT is detected based on the respective outputs of, for example, the boom angle sensor S1, the arm angle sensor S2, and the bucket angle sensor S3.

The upper turning body 3 is provided with a cabin 10 as a driver's cabin and a power source (power engine) such as an engine 11. The engine 11, which is an example of a power engine, is, for example, an internal combustion engine such as a diesel engine, a gasoline engine, or a hydrogen engine. In the illustrated example, the engine 11 is a diesel engine. Note that the engine 11 may be replaced by another power engine, such as an electric motor (electric motor) using the power generated by a fuel cell or an electric motor (electric motor) using the power stored in a battery, such as a lithium-ion battery, or the engine 11 may be a combination of two or more power engines, such as a combination of an internal combustion engine and an electric motor. The upper turning body 3 is equipped with a space recognition device 70, an orientation detection device 71, a positioning device 73, a machine body tilt sensor S4, a turning angular velocity sensor S5, etc. Inside the cabin 10, an operation device 26, a controller 30, an information input device 72, a display device D1, a sound output device D2, etc., are provided. In the present application, as a matter of convenience, the side of the upper turning body 3 where the excavation attachment AT is attached is assumed to be the front side and the side where the counterweight is attached is assumed to be the rear side.

The space recognition device 70 is configured to recognize objects existing in the three-dimensional space around the excavator 100. The space recognition device 70 is also configured to calculate the distance between the space recognition device 70 or the excavator 100 and a recognized object. The space recognition device 70 includes, for example, an ultrasonic sensor, a millimeter wave radar, a monocular camera, a stereo camera, a LIDAR, a range image sensor, or an infrared sensor. In the present embodiment, the space recognition device 70 includes a front sensor 70F mounted on the upper front end of the cabin 10, a rear sensor 70B mounted on the upper rear end of the upper turning body 3, a left sensor 70L mounted on the upper left end of the upper turning body 3, and a right sensor (not visible in FIG. 1.) mounted on the upper right end of the upper turning body 3. An upper sensor for recognizing objects present in the space above the upper turning body 3 may be attached to the excavator 100.

The orientation detection device 71 is configured to detect information regarding the relative relationship between the orientation of the upper turning body 3 and the orientation of the lower traveling body 1. The orientation detection device 71 may include, for example, a combination of a geomagnetic sensor attached to the lower traveling body 1 and a geomagnetic sensor attached to the upper turning body 3. Alternatively, the orientation detection device 71 may include a combination of a GNSS receiver mounted on the lower traveling body 1 and a GNSS receiver mounted on the upper turning body 3. The orientation detection device 71 may be a rotary encoder or a rotor position sensor, etc. In a configuration in which the upper turning body 3 is turned by a turning motor generator, the orientation detection device 71 may include a resolver. The orientation detection device 71 may, for example, be attached to a center joint provided in association with the turning mechanism 2 that implements relative rotation between the lower traveling body 1 and the upper turning body 3.

The orientation detection device 71 may include the space recognition device 70 (e.g., a camera) attached to the upper turning body 3. In this case, the orientation detection device 71 applies known image processing to the image (input image) captured by the camera attached to the upper turning body 3 to detect the image of the lower traveling body 1 included in the input image. The orientation detection device 71 then identifies the longitudinal direction of the lower traveling body 1 by detecting the image of the lower traveling body 1 by using known image recognition technology. Then, the angle formed between the direction of the front-rear axis of the upper turning body 3 and the longitudinal direction of the lower traveling body 1 is derived. The front-rear axis direction of the upper turning body 3 is derived from the camera mounting position. In particular, the crawler 1C protrudes from the upper turning body 3, and, therefore, the orientation detection device 71 can identify the longitudinal direction of the lower traveling body 1 by detecting the image of the crawler 1C. In this case, the orientation detection device 71 may be integrated into the controller 30.

The information input device 72 is configured such that an operator of the excavator can input information to the controller 30. In the present embodiment, the information input device 72 is a switch panel installed in close proximity to the display section of the display device D1. However, the information input device 72 may be a touch panel located on the display part of a display device D1, or a sound input device such as a microphone located in the cabin 10. The information input device 72 may be a communication device. In this case, the operator can input information into the controller 30 via a communication terminal such as a smartphone.

The positioning device 73 is configured to measure the current position. In the present embodiment, the positioning device 73 is a GNSS receiver, which detects the position of the upper turning body 3 and outputs the detected value to the controller 30. The positioning device 73 may be a GNSS compass. In this case, the positioning device 73 can detect the position and orientation of the upper turning body 3.

The machine body tilt sensor S4 is configured to detect the tilt of the upper turning body 3 relative to a predetermined plane. In the present embodiment, the machine body tilt sensor S4 is an acceleration sensor that detects the tilt angle around the front-rear axis and the tilt angle around the left-right axis of the upper turning body 3 with respect to the horizontal plane. The front-rear axis and the left-right axis of the upper turning body 3 are orthogonal to each other and pass through the center point of the excavator, which is a point on the turning axis of the excavator 100, for example.

The turning angular velocity sensor S5 is configured to detect the turning angular velocity of the upper turning body 3. In the present embodiment, the turning angular velocity sensor S5 is a gyro sensor. The turning angular velocity sensor S5 may be a resolver or a rotary encoder, etc. The turning angular velocity sensor S5 may detect the turning velocity. The turning velocity may be calculated from the turning angular velocity.

The display device D1 is a device for displaying information. In the present embodiment, the display device D1 is a liquid crystal display installed in the cabin 10. However, the display device D1 may be a display of a communication terminal such as a smartphone.

The sound output device D2 is a device that outputs sound. The sound output device D2 includes at least one of a device that outputs sound to an operator in the cabin 10 and a device that outputs sound to an operator outside the cabin 10. The sound output device D2 may be a speaker attached to the communication terminal.

The operation device 26 is a device used by the operator to operate the actuator. In the present embodiment, the operation device 26 is installed in the cabin 10 for use by an operator seated in the driver's seat.

The controller 30 is a controller (electronic circuit) capable of executing various kinds of control. In the present embodiment, the controller 30 is a computer equipped with a CPU, a RAM, a NVRAM, a ROM, etc., and is configured to control the excavator 100. Further, the controller 30 reads a program corresponding to one or more functions from the ROM and loads the program into the RAM, and causes the CPU to execute the processing corresponding to each function. Thus, each function is implemented in software. However, at least one of the functions may be implemented by hardware or by a combination of software and hardware.

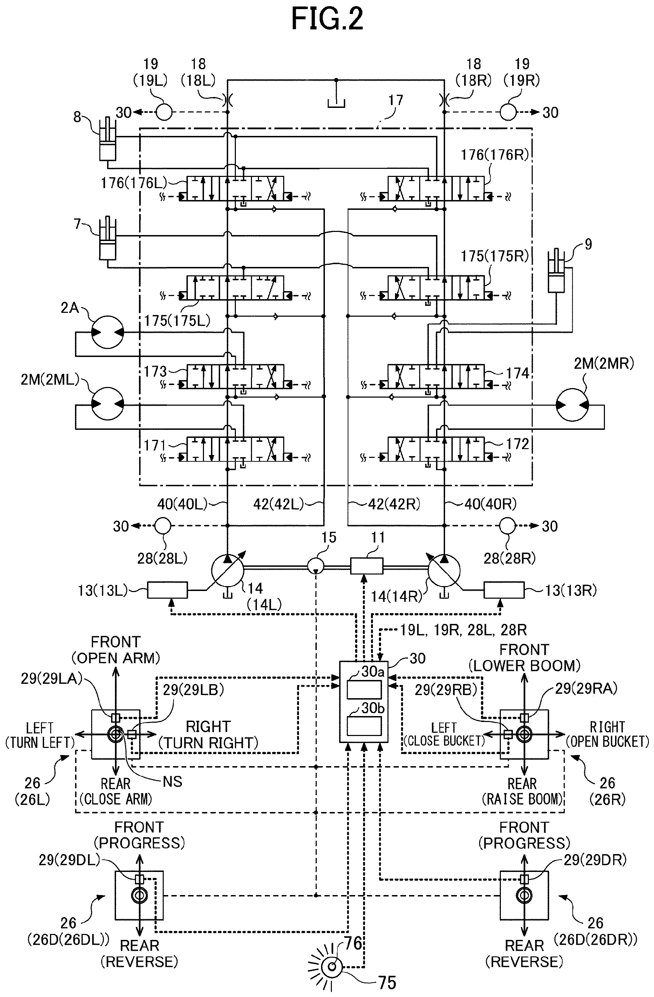

Next, referring to FIG. 2, an example of the configuration of the hydraulic system mounted on the excavator 100 will be described. FIG. 2 illustrates an example of the configuration of a hydraulic system mounted on the excavator 100. FIG. 2 illustrates the mechanical power transmission system, the hydraulic oil line, the pilot line, and the electrical control system with double lines, solid lines, dashed lines, and dotted lines, respectively.

The hydraulic system of the excavator 100 mainly includes an engine 11, a regulator 13, a main pump 14, a pilot pump 15, a control valve part 17, the operation device 26, the discharge pressure sensor 28, an operation pressure sensor 29, a controller 30, a dial 75, an ECO button 76, etc.

In FIG. 2, the hydraulic system is configured such that hydraulic oil can be circulated from the main pump 14 driven by the engine 11 to a hydraulic oil tank via a center bypass pipeline 40 or a parallel pipeline 42.

The engine 11 is the driving source of the excavator 100. In the present embodiment, the engine 11 is, for example, a diesel engine that operates to maintain a predetermined rotation speed. The output shaft of the engine 11 is connected to the respective input shafts of the main pump 14 and the pilot pump 15.

The main pump 14 is configured to supply hydraulic oil to the control valve part 17 via a hydraulic oil line. In the present embodiment, the main pump 14 is a swash plate variable capacitive hydraulic pump.

The regulator 13 is configured to control the discharge amount of the main pump 14. In the present embodiment, the regulator 13 controls the discharge amount of the main pump 14 by adjusting the swash plate tilt angle of the main pump 14 in response to a control command from the controller 30.

The pilot pump 15 is configured to supply hydraulic oil to hydraulic control equipment, including the operation device 26, via a pilot line. In the present embodiment, the pilot pump 15 is a fixed capacitive hydraulic pump. The pilot pump 15 may be omitted. In this case, the functions carried out by the pilot pump 15 may be implemented by the main pump 14. That is, apart from the function of supplying hydraulic oil to the control valve part 17, the main pump 14 may have a function of supplying hydraulic oil to the operation device 26, etc., after the pressure of hydraulic oil is reduced by a throttle, etc.

The control valve part 17 is a hydraulic controller that controls the hydraulic system in the excavator 100. In the present embodiment, the control valve part 17 includes directional selector valves 171 to 176. The directional selector valve 175 includes a directional selector valve 175L and a directional selector valve 175R, and the directional selector valve 176 includes a directional selector valve 176L and a directional selector valve 176R. The control valve part 17 is configured to selectively supply hydraulic oil discharged by the main pump 14 to one or more hydraulic actuators through the directional selector valves 171 to 176. The directional selector valves 171 to 176 control, for example, the flow rate of hydraulic oil flowing from the main pump 14 to the hydraulic actuator and the flow rate of hydraulic oil flowing from the hydraulic actuator to the hydraulic oil tank. The hydraulic actuators include the boom cylinder 7, the arm cylinder 8, the bucket cylinder 9, the left traveling hydraulic motor 2ML, the right traveling hydraulic motor, and the turning hydraulic motor 2A.

The operation device 26 is a device used by the operator to operate the actuator. The actuator includes at least one of a hydraulic actuator and an electric actuator. In the present embodiment, the operation device 26 is configured to supply hydraulic oil discharged by the pilot pump 15 to the pilot port of the corresponding directional selector valve in the control valve part 17 via a pilot line. The pressure of the hydraulic oil supplied to each of the pilot ports (pilot pressure) is the pressure corresponding to the operation direction and the operation amount of the operation device 26 corresponding to each of the hydraulic actuators. However, the operation device 26 may be an electromagnetic pilot type instead of the hydraulic pilot type as described above. Alternatively, the directional selector valve in the control valve part 17 may be an electromagnetic solenoid type spool valve.

The discharge pressure sensor 28 is configured to detect the discharge pressure of the main pump 14. In the present embodiment, the discharge pressure sensor 28 outputs the detected value to the controller 30.

The operation pressure sensor 29 is configured to detect the operation contents of the operation device 26 by the operator. In the present embodiment, the operation pressure sensor 29 detects the operation direction and operation amount of the operation device 26 corresponding to each of the actuators in the form of pressure (operation pressure), and outputs the detected value to the controller 30. The operation content of the operation device 26 may be detected by using other sensors or devices other than the operation pressure sensor, such as potentiometers.

The main pump 14 includes a left main pump 14L and a right main pump 14R. The left main pump 14L then circulates the hydraulic oil to the hydraulic oil tank via a left center bypass pipeline 40L or a left parallel pipeline 42L, and the right main pump 14R circulates the hydraulic oil to the hydraulic oil tank via a right center bypass pipeline 40R or a right parallel pipeline 42R.

The left center bypass pipeline 40L is a hydraulic oil line that passes through the directional selector valves 171, 173, 175L, and 176L located within the control valve part 17. The right center bypass pipeline 40R is a hydraulic oil line that passes through the directional selector valves 172, 174, 175R, and 176R located within the control valve part 17.

The directional selector valve 171 is a spool valve that supplies hydraulic oil discharged by the left main pump 14L to the left traveling hydraulic motor 2ML and switches the flow of hydraulic oil to discharge the hydraulic oil discharged by the left traveling hydraulic motor 2ML to the hydraulic oil tank.

The directional selector valve 172 is a spool valve that supplies hydraulic oil discharged by the right main pump 14R to the right traveling hydraulic motor 2MR and switches the flow of hydraulic oil to discharge the hydraulic oil discharged by the right traveling hydraulic motor 2MR to the hydraulic oil tank.

The directional selector valve 173 is a spool valve that supplies hydraulic oil discharged by the left main pump 14L to the turning hydraulic motor 2A and switches the flow of hydraulic oil to discharge the hydraulic oil discharged by the turning hydraulic motor 2A to the hydraulic oil tank.

The directional selector valve 174 is a spool valve that supplies hydraulic oil discharged by the right main pump 14R to the bucket cylinder 9 and switches the flow of hydraulic oil to discharge the hydraulic oil in the bucket cylinder 9 to the hydraulic oil tank.

The directional selector valve 175L is a spool valve that switches the flow of hydraulic oil in order to supply hydraulic oil discharged by the left main pump 14L to the boom cylinder 7. The directional selector valve 175R is a spool valve that supplies hydraulic oil discharged by the right main pump 14R to the boom cylinder 7 and switches the flow of hydraulic oil to discharge the hydraulic oil in the boom cylinder 7 to the hydraulic oil tank.

The directional selector valve 176L is a spool valve that supplies hydraulic oil discharged by the left main pump 14L to the arm cylinder 8 and switches the flow of hydraulic oil to discharge the hydraulic oil in the arm cylinder 8 to the hydraulic oil tank.

The directional selector valve 176R is a spool valve that supplies hydraulic oil discharged by the right main pump 14R to the arm cylinder 8 and switches the flow of hydraulic oil to discharge the hydraulic oil in the arm cylinder 8 to the hydraulic oil tank.

The left parallel pipeline 42L is a hydraulic oil line parallel to the left center bypass pipeline 40L. The left parallel pipeline 42L can supply hydraulic oil to a more downstream directional selector valve if the flow of hydraulic oil through the left center bypass pipeline 40L is limited or interrupted by any of the directional selector valves 171, 173, and 175L. The right parallel pipeline 42R is a hydraulic oil line parallel to the right center bypass pipeline 40R. The right parallel pipeline 42R can supply hydraulic oil to a more downstream directional selector valve if the flow of hydraulic oil passing through the right center bypass pipeline 40R is limited or interrupted by any of the directional selector valves 172, 174, and 175R.

The regulator 13 includes a left regulator 13L and a right regulator 13R. The left regulator 13L controls the discharge amount of the left main pump 14L by adjusting the swash plate tilt angle of the left main pump 14L according to the discharge pressure of the left main pump 14L. Specifically, the left regulator 13L adjusts the swash plate tilt angle of the left main pump 14L in response to an increase in the discharge pressure of the left main pump 14L, for example, to reduce the discharge amount. The same applies to the right regulator 13R. This is done such that the absorbed power (e.g., absorbed horsepower) of the main pump 14, expressed as the product of the discharge pressure and the discharge amount, does not exceed the output power (e.g., output horsepower) of the engine 11.

The operation device 26 includes a left operation lever 26L, a right operation lever 26R, and a traveling lever 26D as operation levers. The traveling lever 26D includes a left traveling lever 26DL and a right traveling lever 26DR.

The left operation lever 26L is used for a turning operation and the arm 5 operation. When the left operation lever 26L is operated in the front-rear direction, the hydraulic oil discharged by the pilot pump 15 is used to apply control pressure corresponding to the lever operation amount to the pilot port of the directional selector valve 176. When the left operation lever 26L is operated in the left-right direction, the hydraulic oil discharged by the pilot pump 15 is used to apply control pressure corresponding to the amount of lever operation to the pilot port of the directional selector valve 173.

Specifically, when the left operation lever 26L is operated in the arm closing direction, the hydraulic oil flows into the right pilot port of the directional selector valve 176L and the hydraulic oil flows into the left pilot port of the directional selector valve 176R. When the left operation lever 26L is operated in the arm opening direction, the hydraulic oil flows into the left pilot port of the directional selector valve 176L and the hydraulic oil flows into the right pilot port of the directional selector valve 176R. Further, the left operation lever 26L allows hydraulic oil to flow into the left pilot port of the directional selector valve 173 when operated in the left turning direction, and allows hydraulic oil to flow into the right pilot port of the directional selector valve 173 when operated in the right turning direction.

The right operation lever 26R is used to operate the boom 4 and the bucket 6. When the right operation lever 26R is operated in the front-back direction, the hydraulic oil discharged by the pilot pump 15 is used to apply control pressure corresponding to the lever operation amount to the pilot port of the directional selector valve 175. When the right operation lever 26R is operated in the left-right direction, the hydraulic oil discharged by the pilot pump 15 is used to apply control pressure corresponding to the amount of lever operation to the pilot port of the directional selector valve 174.

Specifically, the right operation lever 26R allows hydraulic oil to flow into the left pilot port of the directional selector valve 175R when operated in the boom lowering direction. When the right operation lever 26R is operated in the boom raising direction, the hydraulic oil flows into the right pilot port of the directional selector valve 175L and the hydraulic oil flows into the left pilot port of the directional selector valve 175R. Further, the right operation lever 26R allows hydraulic oil to flow into the right pilot port of the directional selector valve 174 when operated in the bucket closing direction, and allows hydraulic oil to flow into the left pilot port of the directional selector valve 174 when operated in the bucket opening direction.

The traveling lever 26D is used to operate the crawler 1C. Specifically, the left traveling lever 26DL is used to operate the left crawler 1CL. The left traveling lever 26DL may be configured to interlock with the left traveling pedal. When the left traveling lever 26DL is operated in the front-rear direction, the hydraulic oil discharged by the pilot pump 15 is used to apply control pressure corresponding to the lever operation amount to the pilot port of the directional selector valve 171. The right traveling lever 26DR is used to operate the right crawler. The right traveling lever 26DR may be configured to interlock with the right traveling pedal. When the right traveling lever 26DR is operated in the front-rear direction, the hydraulic oil discharged by the pilot pump 15 is used to apply control pressure corresponding to the lever operation amount to the pilot port of the directional selector valve 172.

The discharge pressure sensor 28 includes a discharge pressure sensor 28L and a discharge pressure sensor 28R. The discharge pressure sensor 28L detects the discharge pressure of the left main pump 14L and outputs the detected value to the controller 30. The same applies to the discharge pressure sensor 28R.

The operation pressure sensor 29 includes operation pressure sensors 29LA, 29LB, 29RA, 29RB, 29DL, and 29DR. The operation pressure sensor 29LA detects the content of the front-rear operation of the left operation lever 26L by the operator in the form of pressure, and outputs the detected value to the controller 30. The operation contents are, for example, the lever operation direction and the lever operation amount (lever operation angle).

Similarly, the operation pressure sensor 29LB detects the content of the left-right operation on the left operation lever 26L by the operator in the form of pressure and outputs the detected value to the controller 30. The operation pressure sensor 29RA detects the content of the front-rear operation of the right operation lever 26R by the operator in the form of pressure, and outputs the detected value to the controller 30. The operation pressure sensor 29RB detects, in the form of pressure, the content of the left-right operation by the operator on the right operation lever 26R, and outputs the detected value to the controller 30. The operation pressure sensor 29 DL detects the content of the front-rear operation of the left traveling lever 26 DL by the operator in the form of pressure, and outputs the detected value to the controller 30. The operation pressure sensor 29 DR detects the content of the front-rear operation of the right traveling lever 26 DR by the operator in the form of pressure, and outputs the detected value to the controller 30.

The controller 30 receives the output of the operation pressure sensor 29 and, if necessary, outputs a control command to the regulator 13 to change the discharge amount of the main pump 14. Further, the controller 30 receives the output of the control pressure sensor 19 provided upstream of a throttle 18, and outputs a control command to the regulator 13 as necessary to change the discharge amount of the main pump 14. The throttle 18 includes a left throttle 18L and a right throttle 18R, and the control pressure sensor 19 includes a left control pressure sensor 19L and a right control pressure sensor 19R.

In the left center bypass pipeline 40L, a left throttle 18L is located between the most downstream directional selector valve 176L and the hydraulic oil tank. Therefore, the flow of hydraulic oil discharged by the left main pump 14L is limited by the left throttle 18L. The left throttle 18L then generates control pressure to control the left regulator 13L. The left control pressure sensor 19L is a sensor for detecting this control pressure and outputs the detected value to the controller 30. The controller 30 controls the discharge amount of the left main pump 14L by adjusting the swash plate tilt angle of the left main pump 14L according to this control pressure. The controller 30 decreases the discharge amount of the left main pump 14L as the control pressure increases, and increases the discharge amount of the left main pump 14L as the control pressure decreases. The discharge rate of the right main pump 14R is similarly controlled.

Specifically, in the standby state where none of the hydraulic actuators in the excavator 100 are operated as illustrated in FIG. 2, the hydraulic oil discharged by the left main pump 14L passes through the left center bypass pipeline 40L to the left throttle 18L. The flow of hydraulic oil discharged by the left main pump 14L increases the control pressure generated upstream of the left throttle 18L. As a result, the controller 30 reduces the discharge amount of the left main pump 14L to the permissible minimum discharge amount and reduces the pressure loss (pumping loss) when the discharged hydraulic oil passes through the left center bypass pipeline 40L. On the other hand, when any of the hydraulic actuators is operated, the hydraulic oil discharged by the left main pump 14L flows into the hydraulic actuator to be operated via the directional selector valve corresponding to the hydraulic actuator to be operated. The flow of hydraulic oil discharged by the left main pump 14L decreases or eliminates the amount reaching the left throttle 18L and reduces the control pressure generated upstream of the left throttle 18L. As a result, the controller 30 increases the discharge of the left main pump 14L, circulates sufficient hydraulic oil to the operated hydraulic actuator, and ensures the operation of the operated hydraulic actuator. The controller 30 similarly controls the discharge amount of the right main pump 14R.

With the above configuration, the hydraulic system of FIG. 2 can reduce wasteful energy consumption in the main pump 14 in the standby state. Wasteful energy consumption includes pumping losses caused by hydraulic oil discharged by the main pump 14 in the center bypass pipeline 40. Further, the hydraulic system in FIG. 2 can reliably supply sufficient hydraulic oil from the main pump 14 to the hydraulic actuator to be operated when the hydraulic actuator is operated.

The dial 75 is configured to allow the operator to manually adjust the target rotation speed of the engine 11. Specifically, the dial 75 is configured to transmit information indicating the setting status of the target rotation speed of the engine 11 to the controller 30. In the present embodiment, the dial 75 is configured such that the target rotation speed can be switched in ten steps from the first level (the level corresponding to the highest target rotation speed) to the tenth level (the level corresponding to the lowest target rotation speed). The actual rotation speed of the engine 11 is controlled to be the target rotation speed selected by the dial 75.

The ECO button 76 is an example of an operating tool for switching the ECO mode ON and OFF. The ECO mode is one of the work modes of the excavator 100 and is a work mode in which a function is executed to reduce the consumption of energy (fuel). The work mode of the excavator 100 may include a crane mode or the like used during crane work. In the present embodiment, the work mode of the excavator 100 is configured to be switched between the ECO mode and the regular mode whenever the ECO button 76 is pressed. The regular mode is one of the work modes of the excavator 100 and is a work mode in which no function is performed to reduce the consumption of fuel. The functions performed in ECO mode include, for example, a function to slow down the movement of the attachment. When the function of slowing down the movement of the attachment is performed, the respective expansion and contraction accelerations of the boom cylinder 7, the arm cylinder 8, and the bucket cylinder 9 when moving the operation lever away from the neutral position are limited to less than or equal to a predetermined value. In the present embodiment, the maximum expansion and contraction speed is not limited, but the maximum expansion and contraction speed may also be limited. Further, in the present embodiment, the expansion and contraction acceleration when returning the operation lever to the neutral position is not limited, but the expansion and contraction acceleration when returning the operation lever to the neutral position may also be limited. This function is achieved, for example, by limiting the stroke acceleration (the rate of increase in pilot pressure) of the directional selector valves 174 to 176. By using this ECO button 76, the operator of the excavator 100 can reduce the consumption of fuel, if necessary. Thus, the excavator 100 can support a situation, for example, in which the operator wishes to reduce the fuel consumption even by limiting the workability of the excavator 100.

Next, an information acquiring part 30a and a control part 30b, which are the functions included in the controller 30, are explained. In FIG. 2, the information acquiring part 30a and the control part 30b are illustrated separately as a matter of convenience, but these need not be physically distinct and may include entirely or partially common software or hardware components or combinations thereof.

The information acquiring part 30a is configured to acquire information about the excavator 100. In the present embodiment, the information acquiring part 30a is configured to acquire information from at least one of the boom angle sensor S1, the arm angle sensor S2, the bucket angle sensor S3, the machine body tilt sensor S4, the turning angle velocity sensor S5, a cylinder pressure sensor, a turning pressure sensor, a traveling pressure sensor, a boom cylinder stroke sensor, an arm cylinder stroke sensor, a bucket cylinder stroke sensor, the discharge pressure sensor 28, the operation pressure sensor 29, the space recognition device 70, the orientation detection device 71, the information input device 72, the positioning device 73, a communication device, etc. The cylinder pressure sensor includes at least one of, for example, a boom rod pressure sensor, a boom bottom pressure sensor, an arm rod pressure sensor, an arm bottom pressure sensor, a bucket rod pressure sensor, and a bucket bottom pressure sensor.

The information acquiring part 30a acquires at least one of, for example, a boom angle, an arm angle, a bucket angle, a machine body tilt angle, a turning angular velocity, a boom rod pressure, a boom bottom pressure, an arm rod pressure, a bucket bottom pressure, a turning pressure, a traveling pressure, a boom stroke amount, an arm stroke amount, a bucket stroke amount, a discharge pressure of the main pump 14, an operation pressure of the operation device 26, information about objects existing in the three-dimensional space around the excavator 100, information about the relative relationship between the orientation of the upper turning body 3 and the orientation of the lower traveling body 1, information input to the controller 30, and information about the current position, as information about the work content of the excavator 100. At least one of the boom rod pressure, the boom bottom pressure, the arm rod pressure, the arm bottom pressure, the bucket rod pressure, and the bucket bottom pressure is also referred to as cylinder pressure.

The control part 30b is configured to be able to determine whether a specific work or a specific operation is being performed based on information about the work content of the excavator 100.

For example, the control part 30b can determine whether excavation is being performed based on the posture of the excavation attachment AT and the pressure of the hydraulic oil in the boom cylinder 7. Specifically, the control part 30b can determine whether excavation is being performed based on the posture of the excavation attachment AT and the boom bottom pressure derived from the boom angle and the arm angle.

Further, the control part 30b can determine whether the boom raising operation is performed based on the output of the operation pressure sensor 29RA. Specifically, the control part 30b can determine whether the boom raising operation is being performed based on the pilot pressure (hereafter, "boom raising pilot pressure") acting on the pilot port of the directional selector valve 175 when the right operation lever 26R is operated in the boom raising direction.

The control part 30b can also determine whether the boom lowering operation is being performed based on the output of the operation pressure sensor 29RA. Specifically, the control part 30b can determine whether the boom lowering operation is being performed based on the pilot pressure (hereafter, "boom lowering pilot pressure".) acting on the pilot port of the directional selector valve 175 when the right operation lever 26R is operated in the boom lowering direction.

The control part 30b is configured to control the movement of the excavator 100 based on information about the work content of the excavator 100. In the present embodiment, the control part 30b is configured to reduce the rotation speed of the engine 11 before the low-load operation of the excavation attachment AT is started when the low-load operation is expected to be performed.

This is because if the low-load operation of the excavation attachment AT is performed by using the same rotation speed of the engine 11 as that of the high-load operation of the excavation attachment AT, more fuel will be consumed than necessary. Therefore, the control part 30b is configured to reduce the rotation speed of the engine 11 before the low-load operation is started in order to reduce wasteful consumption of fuel.

The low-load operation of the excavation attachment AT is, for example, a boom lowering and turning operation, a boom lowering single operation, or an operation of the soil discharging process. The boom lowering and turning operation is typically a combined operation including a boom lowering operation and a turning operation. However, the boom lowering and turning operation may be a combined operation including the boom lowering operation, the turning operation, and the bucket opening operation. The operation of the soil discharging process is typically a combined operation including a boom lowering operation, an arm opening operation, and a bucket opening operation in the air. However, the operation of the soil discharging process may be a combined operation including an arm opening operation and a bucket opening operation, or may be a single bucket closing operation. The high-load operation of the excavation attachment AT is, for example, a boom raising and turning operation, a boom raising single operation, or an arm closing operation in the excavation process. The boom raising and turning operation is a combined operation of a boom raising operation and a turning operation.

Here, "before the low-load operation is started" is, for example, before the boom lowering and turning operation is started. In this case, "before the boom lowering and turning operation is started" is preferably before the right operation lever 26R is tilted in the boom lowering direction. This is because the earlier the timing of lowering the rotation speed of the engine 11 is, the less fuel is wasted when the low-load operation is actually performed.

For example, "before the boom lowering and turning operation is started" may be when the boom raising operation is about to end. That is, the control part 30b may be configured to determine that the implementation of the boom lowering and turning operation is expected during the boom raising operation, that is, before the boom raising operation is completed, and to reduce the rotation speed of the engine 11.

However, "before the boom lowering and turning operation is started" may be when the right operation lever 26R is tilted in the boom lowering direction or before the boom cylinder 7 actually contracts after the right operation lever 26R is tilted in the boom lowering direction.

Alternatively, "before the boom lowering and turning operation is started" may be when it is detected that the lever tilting has switched from operating in the direction of the maximum tilt angle to operating in the neutral direction. Alternatively, "before the boom lowering and turning operation is started" may be when it is detected that the lever tilting has switched from operating in the direction of the maximum tilt angle to operating in the neutral direction when the lever tilting is about 80%. Note that, with respect to lever tilting, the lever tilting at the maximum tilt angle is set at 100%, and the lever tilting at the neutral angle is set at 0%.

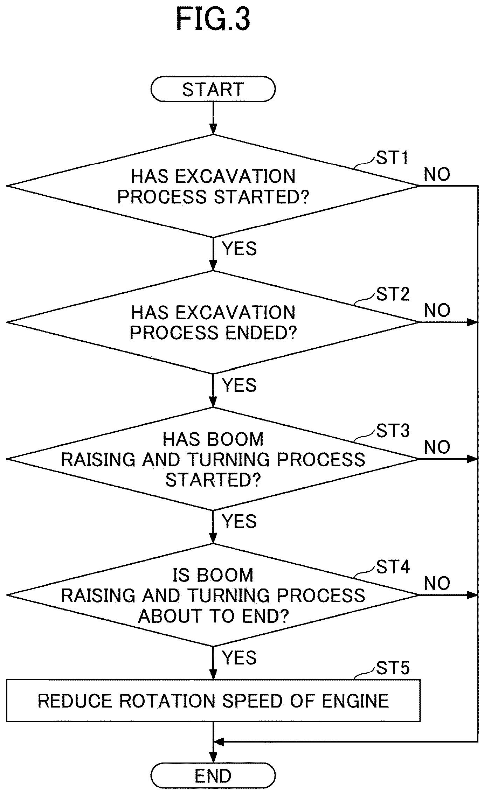

Now, referring to FIG. 3, an example of a process (hereafter, "rotation speed reduction processing") in which the control part 30b of the controller 30 reduces the rotation speed of the engine 11 before the low-load operation is started will be described. FIG. 3 is a flowchart of an example of rotation speed reduction in excavation loading work. Excavation loading work is divided into an excavation process, a boom raising and turning process, a soil discharging process, and a boom lowering and turning process. A low-load operation is an operation of the soil discharging process. The excavation process includes at least one of a boom raising operation, an arm closing operation, and a bucket closing operation. The soil discharging process includes at least one of a boom lowering operation, an arm opening operation, and a bucket opening operation. The control part 30b repeatedly executes this speed reduction process at predetermined control cycles until the rotation speed of the engine 11 is actually reduced. In the example illustrated in FIG. 3, the control part 30b is configured to execute the rotation speed reduction process when the ECO mode is ON, and to not execute the rotation speed reduction process when the ECO mode is OFF. However, the control part 30b may be configured to execute the rotation speed reduction process regardless of the ON/OFF of the ECO mode.

First, the control part 30b determines whether the excavation process has been started (step ST1). In the example illustrated in FIG. 3, the control part 30b determines whether the excavation process has been started by determining whether excavation has been carried out in a past predetermined period (e.g., one second) including the current time point, based on the information about the work content of the excavator 100 acquired by the information acquiring part 30a. Specifically, the control part 30b determines whether excavation has been performed within the predetermined period based on the posture of the excavation attachment AT derived from the boom angle and arm angle acquired within the predetermined period, and the boom bottom pressure acquired within the predetermined period. The posture of the excavation attachment AT may be derived from the boom angle, the arm angle, and the bucket angle.

Alternatively, the control part 30b may determine whether excavation has been performed based on the arm rod pressure, the arm bottom pressure, the arm pilot pressure, and the bucket pilot pressure. The arm pilot pressure is the pilot pressure acting on the pilot port of the directional selector valve 175. The bucket pilot pressure is the pilot pressure acting on the pilot port of the directional selector valve 174.

Alternatively, the control part 30b may determine whether excavation has been performed based on the bucket closing pilot pressure and the boom raising pilot pressure and the discharge pressure of the main pump 14, or based on the bucket closing pilot pressure and the arm closing pilot pressure and the discharge pressure of the main pump 14. The bucket closing pilot pressure is the pilot pressure that acts on the pilot port of the directional selector valve 174 when the right operation lever 26R is operated in the bucket closing direction. The arm closing pilot pressure is the pilot pressure that acts on the pilot port of the directional selector valve 175 when the left operation lever 26L is operated in the arm closing direction.

When it is determined that the excavation process has not started (NO in step ST1), the control part 30b determines that the excavation process has not started and ends the present rotation speed reduction process. This is because the implementation of low-load operation is not expected. Specifically, this is because the control part 30b can determine that the operation of the soil discharging process, which is a low-load operation, will not be performed because no soil or the like is contained in the bucket 6.

When it is determined that the excavation process has started (YES in step ST1), the control part 30b determines whether the excavation process has ended (step ST2). In the example illustrated in FIG. 3, the control part 30b determines whether the excavation process has ended based on at least one of the operation pressure and cylinder pressure acquired by the information acquiring part 30a.

When it is determined that the excavation process has not ended (NO in step ST2), the control part 30b ends the current rotation speed reduction process. This is because the implementation of low-load operation is not expected. Specifically, this is because the control part 30b can determine that the operation of the soil discharging process, which is a low-load operation, will not be performed because the excavation is not finished.

When it is determined that the excavation process has ended (YES in step ST2), it is determined that the excavation process has been completed, and the control part 30b determines whether the boom raising and turning process has started. Specifically, the control part 30b determines whether the boom raising and turning process has started (step ST3). In the example illustrated in FIG. 3, the control part 30b determines whether the boom raising and turning process has started by determining whether the boom raising is being carried out based on the boom raising pilot pressure acquired by the information acquiring part 30a. Specifically, when the boom raising pilot pressure exceeds a first predetermined pressure (e.g., 2.0 MPa), the control part 30b determines that boom raising (boom raising operation) is being performed.

When it is determined that the boom raising and turning process has not started (NO in step ST3), the control part 30b ends the current rotation speed reduction process. This is because the implementation of low-load operation is not expected. Specifically, because boom raising is not performed, and, therefore, the control part 30b can determine that a boom lowering single operation or a boom lowering and turning operation, which is a low-load operation, is not performed.

When it is determined that the boom raising and turning process has started (YES in step ST3), it is determined that the boom raising and turning process has started, and the control part 30b determines whether the boom raising and turning process is about to end (step ST4). In the example illustrated in FIG. 3, the control part 30b is configured to omit the determination of steps ST1, ST2, and ST3 and to execute the determination of step ST4 when repeating the execution of the rotation speed reduction process once it has been determined that the boom has been raised.

Specifically, the control part 30b determines whether the boom raising and turning process is about to end by determining whether the boom raising is about to end based on the boom raising pilot pressure acquired by the information acquiring part 30a. More specifically, the control part 30b determines that boom raising is about to end when the boom-raising pilot pressure, which has been above the first predetermined pressure, falls below the second predetermined pressure (e.g., 1.5 MPa). The second predetermined pressure is typically lower than the first predetermined pressure. However, the second predetermined pressure may be higher than the first predetermined pressure.

The control part 30b may determine that the boom raising is about to end when the boom raising pilot pressure, which has been above the first predetermined pressure, is continuously below the second predetermined pressure for a predetermined period of time.

Alternatively, the control part 30b may determine that the boom raising is about to end when the boom raising pilot pressure, which has been above the first predetermined pressure, continues to drop continuously over a predetermined period of time.

When it is determined that the boom raising and turning process is not likely to end (NO in step ST4), the control part 30b ends the current rotation speed reduction process. This is because the control part 30b can determine that the low-load operation will not be performed immediately at this time because the boom raising is ongoing.

When it is determined that the boom raising and turning process is about to end (YES in step ST4), it is determined that it is before the low-load operation (soil discharging process) is started, and the control part 30b lowers the rotation speed of the engine 11 (step ST5). This is because the control part 30b can determine that there is a high probability that the boom lowering single operation or the boom lowering and turning operation, which are low-load operations, will be performed within a predetermined time thereafter.

Specifically, the control part 30b lowers the actual rotation speed of the engine 11 by lowering the target rotation speed of the engine 11. In the example illustrated in FIG. 3, the control part 30b adopts a value, which is obtained by subtracting a predetermined value (predetermined reduction range) from the current target rotation speed (hereafter, "first target rotation speed"), as the value of the new target rotation speed (hereafter, "second target rotation speed"). In the example illustrated in FIG. 3, the predetermined reduction range is a value that is set in advance for each level of the first target rotation speed. In this case, for example, the value of the second target rotation speed set when a first level is selected as the first target rotation speed, is different from the value of the second target rotation speed set when a second level is selected as the first target rotation speed. However, the control part 30b may adopt a value that is set in advance as the value of the second target rotation speed, regardless of the first target rotation speed. In this case, for example, the value of the second target rotation speed set when the first level is selected as the first target rotation speed, may be the same as the value of the second target rotation speed set when the second level is selected as the first target rotation speed. The same applies to the relationship between the first level and levels other than the second level.

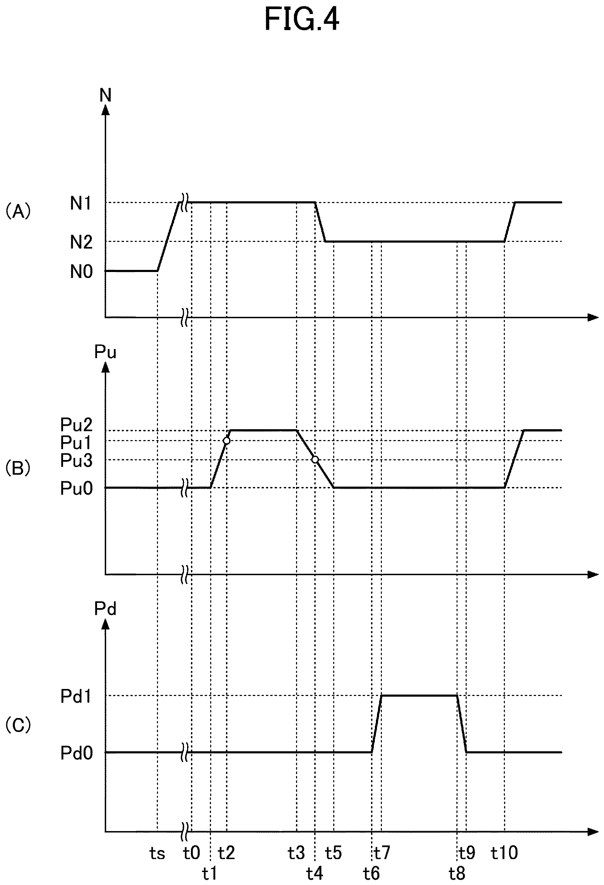

Next, referring to FIG. 4, the time transition of the target rotation speed N, the boom raising pilot pressure Pu, and the boom lowering pilot pressure Pd of the engine 11 when the rotation speed reduction process illustrated in FIG. 3 is executed, is explained. FIG. 4 illustrates the time transition of the target rotation speed N, the boom raising pilot pressure Pu, and the boom lowering pilot pressure Pd. Specifically, FIG. 4 (A) illustrates the time transition of the target rotation speed N, FIG. 4 (B) illustrates the time transition of the boom-raising pilot pressure Pu, and FIG. 4 (C) illustrates the time transition of the boom-lowering pilot pressure Pd. In the example illustrated in FIG. 4, the target rotation speed is maintained at the value N0 in the idle state until time ts. The operator of the excavator 100 is about to finish the excavation process at time t0, and then performs the boom raising operation, the right turning operation, and the boom lowering operation in order to perform the soil discharging process. However, the following explanation can be similarly applied to the case where the right turning operation and the boom lowering operation are performed simultaneously, that is, when the boom lowering and turning operation is performed.

Specifically, in the example illustrated in FIG. 4, the operator of the excavator 100 starts operating the right operation lever 26R in the boom raising direction at time t1. At this time, the target rotation speed N of the engine 11 is set to the value N1 of the first target rotation speed as illustrated in FIG. 4 (A). Further, the boom raising pilot pressure Pu has a value Pu0 indicating that the right operation lever 26R is in the neutral position, as illustrated in FIG. 4 (B).

Then, when the boom raising pilot pressure Pu exceeds the value Pu1 at time t2, the control part 30b of the controller 30 determines that boom raising is being performed. The value Pu1 is the threshold used in the determination of step ST3 in FIG. 3. The value Pu1 may be, for example, the value of the boom raising pilot pressure Pu when a lever tilt of about 80% in the boom raising direction is performed with respect to the right operation lever 26R.

Then, the operator of the excavator 100 starts to return the right operation lever 26R, which had been operated in the boom raising direction, to the neutral position at time t3. At this time, the target rotation speed N of the engine 11 is set to a value N1 as illustrated in FIG. 4 (A). The value N1 may be, for example, the value of the rated engine rotation speed. That is, in the example illustrated in FIG. 4, when the boom is being raised, the rotation speed of the engine 11 may be controlled to be the rated engine rotation speed. However, the rotation speed of the engine 11 may be controlled to be higher than the rated engine rotation speed when the boom is raised. Further, as illustrated in FIG. 4 (B), the boom-raising pilot pressure Pu has a value Pu2, which indicates that the right operation lever 26R is in the state of being tilted to the maximum extent in the boom-raising direction.

Then, when the boom raising pilot pressure Pu falls below the value Pu3 at time t4, the control part 30b of the controller 30 determines that the boom raising is about to end. The value Pu3 is the threshold used in the determination of step ST4 in FIG. 3.

When the control part 30b determines that the boom is about to end, the control part 30b reduces the target rotation speed N of the engine 11 from the current value N1 (first target rotation speed) to a value N2 that is set in advance as the value of the second target rotation speed. Therefore, the target rotation speed N is changed from the value N1 to the value N2 at time t4 as illustrated in FIG. 4 (A).

Then, at time t5, the operator of the excavator 100 returns the right operation lever 26R operated in the boom raising direction to the neutral position. Then, at time t6, the operator starts operating the right operation lever 26R in the boom lowering direction. In the example illustrated in FIG. 4, when the control part 30b determines that the boom lowering operation is started, the control part 30b continues the state in which the target rotation speed N of the engine 11 is lowered to a value N2. Therefore, the target rotation speed N of the engine 11 is maintained at the value N2 as illustrated in FIG. 4 (A). Further, as illustrated in FIG. 4 (C), the boom lowering pilot pressure Pd has a value Pd0 indicating that the right operation lever 26R is in the neutral position.

Thereafter, the boom lowering pilot pressure Pd reaches the value Pd1 at time t7, as illustrated in FIG. 4 (C). The value Pd1 indicates that the right operation lever 26R is in the state of being lowered to the maximum in the boom lowering direction.

Then, at time t8, the operator of the excavator 100 starts to return the right operation lever 26R operated in the boom lowering direction to the neutral position. Thereafter, the boom lowering pilot pressure Pd reaches the value Pd0 at time t9 as illustrated in FIG. 4 (C). As illustrated in FIG. 4 (A), the target rotation speed N of the engine 11 is maintained at a value N2 over the period from time t6 to time t9, that is, over the entire period when the right operation lever 26R is operated in the boom lowering direction.

In this way, the control part 30b of the controller 30 can reduce the rotation speed of the engine 11 when the boom lowering single operation, which is a low-load operation, is performed. Therefore, the control part 30b can reduce the consumption of wasted energy (fuel).

Further, the control part 30b can reduce the rotation speed of the engine 11 before the boom lowering single operation is started. Therefore, the control part 30b can reduce the rotation speed of the engine 11 for a longer period than the period during which the boom lowering alone is actually performed. As a result, the control part 30b can further reduce wasteful fuel consumption compared with the case of reducing the rotation speed of the engine 11 after the boom lowering single operation is started.

In the example illustrated in FIG. 4, when the operation of the right operation lever 26R in the boom raising direction is started at the subsequent time t10, the control part 30b returns (increases) the target rotation speed N of the engine 11 from the current value N2 to the original target rotation speed value N1. Therefore, the target rotation speed N is changed from the value N2 to the value N1 at time t10 as illustrated in FIG. 4 (A). The control part 30b may return (increase) the target rotation speed N of the engine 11 from the current value N2 to the original target rotation speed value N1 when a combined operation such as a boom raising and turning operation is started.

Alternatively, the control part 30b may return (increase) the target rotation speed N of the engine 11 from the current value N2 to the original target rotation speed value N1 at time t9 when it is determined that the boom lowering operation is ended.

Further, the control part 30b may gradually return (increase) the target rotation speed N of the engine 11 from the current value N2 to the original target rotation speed value N1.

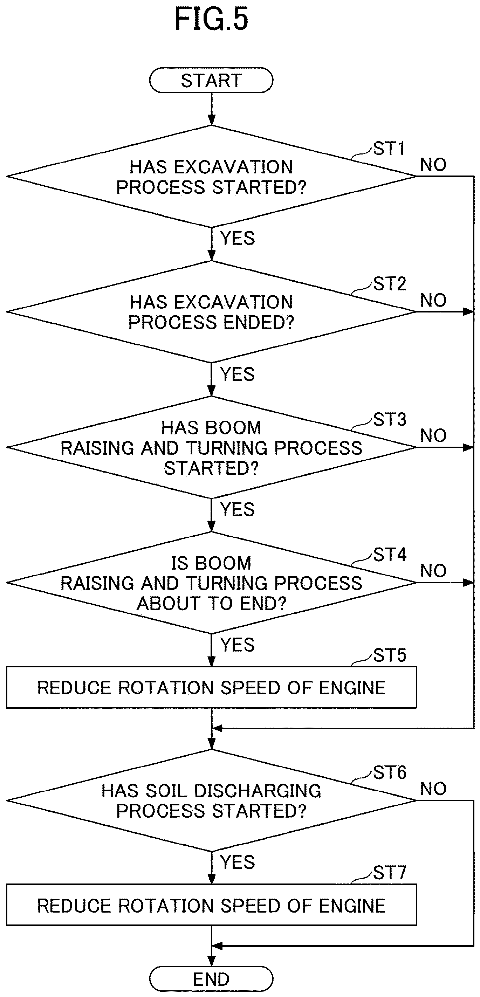

Next, another example of the rotation speed reduction process will be described with reference to FIG. 5. FIG. 5 is a flowchart of another example of the rotation speed reduction process. The control part 30b repeatedly executes this speed reduction process in a predetermined control period until the rotation speed of the engine 11 is actually reduced. In the example illustrated in FIG. 5, the control part 30b is configured to execute the rotation speed reduction process when the ECO mode is ON, and is configured to not execute the rotation speed reduction process when the ECO mode is OFF. However, the control part 30b may be configured to execute the rotation speed reduction process regardless of the ON/OFF of the ECO mode.

Steps ST1 through ST5 in the flowchart illustrated in FIG. 5 are the same as steps ST1 through ST5 in the flowchart illustrated in FIG. 3. Therefore, in the following, descriptions of steps ST1 to ST5 are omitted, and subsequent steps ST6 and ST7 are described in detail.

After the rotation speed of the engine 11 is reduced in step ST5, the control part 30b of the controller 30 determines whether the soil discharging process has started (step ST6). In the example illustrated in FIG. 5, the control part 30b determines whether the soil discharging process has started by determining whether the boom lowering has started based on the boom lowering pilot pressure acquired by the information acquiring part 30a. Specifically, the control part 30b determines that boom lowering (boom lowering operation) is started when the boom lowering pilot pressure exceeds the third fixed pressure.

When it is determined that the soil discharging process has not started (NO in step ST6), the control part 30b ends the current rotation speed reduction process. This is because the control part 30b can determine that the low-load operation may not be performed. Specifically, this is because the control part 30b can determine that a boom lowering single operation or a boom lowering and turning operation, which is a low-load operation, may not be performed.

When it is determined that the soil discharging process has started (YES in step ST6), the control part 30b reduces the rotation speed of the engine 11 (step ST7). This is because the control part 30b can determine that a boom lowering single operation or a boom lowering and turning operation, which is a low-load operation, has actually been performed.

Specifically, the control part 30b further lowers the actual rotation speed of the engine 11 by further lowering the target rotation speed of the engine 11. In the example illustrated in FIG. 5, the control part 30b adopts a value obtained by subtracting a predetermined value (second reduction range) from the value of the second target rotation speed, as the value of the new target rotation speed (hereafter, "third target rotation speed"). The value of the second target rotation speed is the value of the first target rotation speed minus the predetermined value (first reduction range). Therefore, the value of the third target rotation speed also depends on the value of the first target rotation speed. In the example illustrated in FIG. 5, both the first and second reduction ranges are preset values for each level of the first target rotation speed. However, the control part 30b may adopt a preset value as the value of the third target rotation speed regardless of the first target rotation speed.

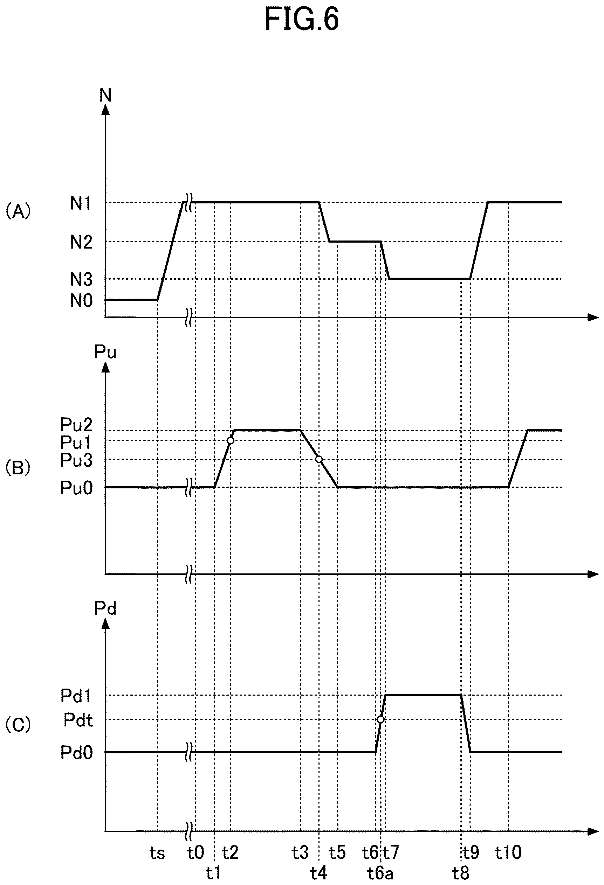

Next, referring to FIG. 6, the time transition of the target rotation speed N, the boom raising pilot pressure Pu, and the boom lowering pilot pressure Pd of the engine 11 when the rotation speed reduction process illustrated in FIG. 5 is executed, are explained. FIG. 6 illustrates the time transitions of the target rotation speed N, the boom raising pilot pressure Pu, and the boom lowering pilot pressure Pd. Specifically, FIG. 6 (A) illustrates the time transition of the target rotation speed N, FIG. 6 (B) illustrates the time transition of the boom-raising pilot pressure Pu, and FIG. 6 (C) illustrates the time transition of the boom-lowering pilot pressure Pd. The time transition of the target rotation speed N illustrated in FIG. 6 (A) is the same as the time transition of the target rotation speed N illustrated in FIG. 4 (A) until time t6a. The time transition of the boom raising pilot pressure Pu illustrated in FIG. 6 (B) is the same as the time transition of the boom raising pilot pressure Pu illustrated in FIG. 4 (B), and the time transition of the boom lowering pilot pressure Pd illustrated in FIG. 6 (C) is the same as the time transition of the boom lowering pilot pressure Pd illustrated in FIG. 4 (C). Therefore, the following is a detailed description of the time transition of the target rotation speed N from time t6a and onwards.

As in the case of FIG. 4, the operator of the excavator 100 intends to finish the excavation process at time t0 and then carry out the soil discharging process by performing the boom raising operation, the right turning operation, and the boom lowering operation in the stated order. However, the following explanation can be similarly applied to the case where the right turning operation and the boom lowering operation are performed simultaneously, that is, when the boom lowering and turning operation is performed.

At time t6, the operator starts operating the right operation lever 26R in the boom lowering direction. At this time, the target rotation speed N of the engine 11 is set to a value N2, as illustrated in FIG. 6 (A). Further, as illustrated in FIG. 6 (C), the boom lowering pilot pressure Pd has a value Pd0 indicating that the right operation lever 26R is in the neutral position.

Thereafter, the boom lowering pilot pressure Pd reaches the value Pdt at time t6a, as illustrated in FIG. 6 (C). The value Pdt is the threshold used in the determination of step ST6 in FIG. 5.

When the boom lowering pilot pressure Pd exceeds the value Pdt at time t6a, the control part 30b of the controller 30 determines that boom lowering has started. When the control part 30b determines that the boom lowering has started, the control part 30b reduces the target rotation speed N of the engine 11 from the current value N2 to a value N3 preset as the value of the third target rotation speed. Therefore, the target rotation speed N is changed from the value N2 to the value N3 at time t6a as illustrated in FIG. 6 (A).

Thereafter, the boom lowering pilot pressure Pd reaches the value Pd1 at time t7 as illustrated in FIG. 6 (C). The value Pd1 indicates that the right operation lever 26R is in the state of being lowered to the maximum in the boom lowering direction.

Then, at time t8, the operator of the excavator 100 starts to return the right operation lever 26R operated in the boom lowering direction to the neutral position. Thereafter, the boom lowering pilot pressure Pd reaches the value Pd0 at time t9 as illustrated in FIG. 6 (C). As illustrated in FIG. 6 (A), the target rotation speed N of the engine 11 is maintained at a value N3 over the period from time t7 to time t9, that is, over almost the entire period when the right operation lever 26R is operated in the boom lowering direction.

In this way, the control part 30b of the controller 30 can further reduce the rotation speed of the engine 11 when the boom lowering single operation, which is a low-load operation, is performed, compared with the case of FIG. 4. Therefore, the control part 30b can further reduce the wasteful consumption of energy (fuel).

Further, the control part 30b can reduce the rotation speed of the engine 11 before the boom lowering single operation is started, and can further reduce the rotation speed of the engine 11 after the boom lowering single operation is started. Therefore, the control part 30b can reduce the rotation speed of the engine 11 for a longer period than the period during which the boom lowering alone is actually performed. On that basis, the control part 30b can further reduce the rotation speed of the engine 11 by one more step over almost the entire period during which the boom lowering single operation is actually performed. As a result, the control part 30b can further reduce the wasteful consumption of energy (fuel) compared with the case of reducing the rotation speed of the engine 11 after the boom lowering single operation is started. Further, the control part 30b can further reduce the wasteful consumption of energy (fuel) compared with the case where the rotation speed the engine 11 is reduced before the boom lowering single operation is started and the rotation speed is maintained until the boom lowering single operation is finished.

Further, the control part 30b can prevent the rotation speed of the engine 11 from being slowed down excessively when the high load operation is performed instead of the expected low load operation. This is because the control part 30b can gradually lower the rotation speed of the engine 11. For example, suppose that at time t4, the value of the target rotation speed of the engine 11 is lowered to the value N3 of the third target rotation speed, instead of the value N2 of the second target rotation speed, and then at time t6, a boom raising operation is started as a high load operation, instead of a boom lowering operation as a low load operation. In this case, when the boom-raising operation is started, the control part 30b attempts to return the rotation speed of the engine 11 to the original rotation speed in order to increase the output power of the engine 11 so that the boom-raising operation is smoothly performed. However, because the actual rotation speed of the engine 11 does not increase rapidly, the control part 30b may not be able to smoothly raise the boom 4. On the other hand, when the value of the target rotation speed of the engine 11 is set to the value N2 of the second target rotation speed at time t4, the control part 30b can return the rotation speed of the engine 11 to the original rotation speed relatively quickly and smoothly raise the boom 4, even if the boom raising operation is subsequently started.

In the example illustrated in FIG. 6, when the right operation lever 26R is returned to the neutral position at time t9, the control part 30b increases the target rotation speed N of the engine 11 from the current value N3 to the original target rotation speed value N1. Therefore, the target rotation speed N is changed from the value N3 to the value N1 at time t9 as illustrated in FIG. 6 (A).

Alternatively, the control part 30b may return (increase) the target rotation speed N of the engine 11 from the current value N3 to the original target rotation speed value N1 when the operation of the right operation lever 26R in the boom raising direction is started at time t10.

Further, the control part 30b may gradually return (increase) the target rotation speed N of the engine 11 from the current value N3 to the original target rotation speed value N1.

As described above, the excavator 100 according to one embodiment of the present invention has the lower traveling body 1, the upper turning body 3 mounted on the lower traveling body 1 so as to be able to turn, an attachment (the excavation attachment AT) mounted on the upper turning body 3, and the engine 11 mounted on the upper turning body 3. The excavator 100 is configured to reduce the rotation speed of the engine 11 before the low-load operation of the excavation attachment AT is started.

The "before the start of the low-load operation of the excavation attachment AT" may be, for example, before time t10, which is the time point at which the boom lowering single operation is started in FIGS. 4 and 6. In this case, "before the low-load operation of the excavation attachment AT is started" may include a period after the boom raising pilot pressure Pu becomes the value Pu0 at time t5 until the boom lowering pilot pressure Pd becomes higher than the value Pd0 at time t6.

For example, the excavator 100 shifts to a state in which the rotation speed of the engine 11 is reduced when the operation content of the operation lever and the operation state of the excavator 100 satisfy a predetermined condition. The operation state of the excavator 100 includes, for example, a state in which the ECO mode is ON and a state in which the ECO mode is OFF. The excavator 100 then shifts to a state in which the rotation speed of the engine 11 is reduced before the boom lowering operation is performed. The excavator 100 also determines how much to reduce the rotation speed of the engine 11 according to the selected target rotation speed level.

Further, the reduced rotation speed of the engine 11 is preferably less than the rotation speed of the engine 11 during the excavation process (from the start of excavation to the end of excavation). For example, in the example illustrated in FIG. 4, the reduced rotation speed of the engine 11, i.e., when target rotation speed N is set to value N2, is less than the rotation speed of the engine 11 in the excavation process, i.e., when target rotation speed N is set to value N1. Both the value N1 and the value N2 are values that change according to the level selected by the dial 75.

The timing of reducing the rotation speed of the engine 11 may be determined regardless of the discharge pressure of the main pump 14. For example, as illustrated in FIG. 5, the timing of reducing the rotation speed of the engine 11 may be determined based on the operation of the right operation lever 26R, regardless of the discharge pressure of the main pump 14.

This configuration allows the excavator 100 to reduce wasteful energy consumption when low-load operations are performed. This is because the rotation speed of the engine 11 can be implemented to match the low-load operation, and the amount of fuel wasted in the engine 11 can be reduced. That is, if the low-load operation is performed while the rotation speed of the engine 11 is maintained to match the high-load operation, fuel is wasted.

The low-load operation is, for example, a boom lowering and turning operation or a boom lowering single operation. Each of the boom lowering and turning operation and boom lowering single operation may involve at least one of an arm opening operation and a bucket opening operation.

The excavator 100 is preferably configured to determine when to reduce the rotation speed of the engine 11 based on the operation of the operation lever. For example, the control part 30b of the controller 30 may lower the rotation speed of the engine 11 at the time when an operation corresponding to a predetermined operation of the excavation attachment AT is performed by using a predetermined operation lever, before an operation corresponding to the low-load operation of the excavation attachment AT is performed.

For example, the control part 30b of the controller 30 may be configured to reduce the rotation speed of the engine 11 when an operation lever tilted in a given direction is returned toward the neutral position. Specifically, when the control part 30b can determine that the right operation lever 26R operated in the boom raising direction has been returned to the neutral position (see time t4 in FIG. 4.), it may be the timing to start reducing the rotation speed of the engine 11. This time point is before the time point when the right operation lever 26R is operated in the boom lowering direction (see time t6 in FIG. 4.).

With this configuration, the control part 30b of the controller 30 can reduce the rotation speed of the engine 11 before the low-load operation of the excavation attachment AT is started. Therefore, the control part 30b can lengthen the period during which the engine 11 is maintained in a lowered speed state compared with the case of lowering the rotation speed of the engine 11 when the low-load operation of the excavation attachment AT is started. That is, the control part 30b can lengthen the period during which wasteful fuel consumption is reduced.

The control part 30b may be configured to further reduce the rotation speed of the engine 11 when the operation of the operation lever to perform a low-load operation is started.

The control part 30b may be configured to reduce the rotation speed of the engine 11 after excavation and boom-raising have been performed. This is to prevent the engine from reducing the rotation speed even though it is unlikely that the boom lowering and turning operation or the boom lowering single operation, which are low-load operations, will be performed. For example, the control part 30b may be configured to reduce the rotation speed of the engine 11 only if it can be determined that boom raising is being performed within a predetermined period after excavation is performed, and then when it can be determined that boom raising is about to end. This is because the control part 30b can determine that if the boom is raised within a predetermined period after the excavation, there is a high probability that the boom lowering and turning operation or the boom lowering single operation will be performed thereafter. That is, the control part 30b can determine that the bucket 6 contains soil, etc., when the boom is raised within a predetermined period after the excavation is carried out, and that the operation to discharge the soil will follow.

With this configuration, the control part 30b can prevent the engine 11 from unnecessarily reducing the rotation speed when the probability of performing a low-load operation is low.

The control part 30b of the controller 30 is configured to reduce the rotation speed of the engine 11 before the low-load operation of the attachment is started, but the reduction in the rotation speed of the engine 11 may be set for each target rotation speed. In this case, the reduction range of the rotation speed of the engine 11 may be stored in the NVRAM or the like in a changeable manner.

For example, the reduction range of the rotation speed of the engine 11 may be set to be different for each target rotation speed. For example, when Level 1 is selected as the target rotation speed, the reduction range of the rotation speed of the engine 11 may be set to be smaller than when Level 9 is selected as the target rotation speed. This is because when the Level 1 is selected, it is considered that the operator of the excavator 100 selects the Level 1 because he or she wants to prioritize the operability of the excavator 100 over the energy saving. This is because the greater the reduction range of the rotation speed of the engine 11, the greater the influence on the operability of the excavator 100. This is also because when the Level 9 is selected, it is considered that the operator of the excavator 100 selects the Level 9 because he or she wants to prioritize energy saving over operability of the excavator 100. This is because the greater the reduction range of rotation speed of the engine 11, the greater the degree to which wasted fuel can be reduced.

Alternatively, the reduction range of the rotation speed of the engine 11 may be set to be different for each work mode. For example, when the regular mode is selected as the work mode of the excavator 100, the reduction range of the rotation speed of the engine 11 may be set to be smaller than when the ECO mode is selected as the work mode of the excavator 100.

The preferred embodiment of the present invention has been described in detail. However, the present invention is not limited to the above described embodiment. Various modifications, substitutions, etc., may be applied to the above embodiment without departing from the scope of the present invention. Further, features described separately can be combined as long as technical inconsistencies do not arise.

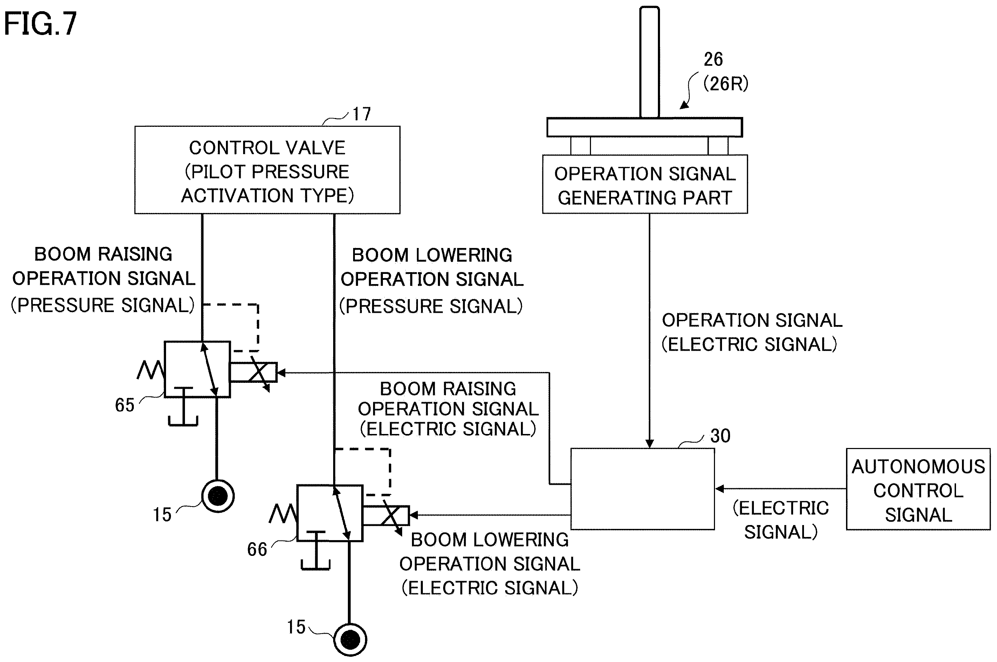

For example, in the above embodiment, the excavator 100 is equipped with a hydraulic operation system, but an electric operation system may be installed instead of the hydraulic operation system. FIG. 7 illustrates an example of the configuration of the electric operation system. Specifically, the electric operation system illustrated in FIG. 7 is an example of a boom operation system and mainly includes the control valve part 17 of a pilot pressure activation type, the right operation lever 26R as an electric operation lever, the controller 30, a solenoid valve 65 for a boom raising operation, and a solenoid valve 66 for a boom lowering operation. The electric operation system of FIG. 7 can be similarly applied to a turning operation system, an arm operation system, a bucket operation system, a traveling operation system, etc.

The control valve part 17 of a pilot pressure activation type includes, as illustrated in FIG. 2, the directional selector valve 171 for the left traveling hydraulic motor 2ML, the directional selector valve 172 for the right traveling hydraulic motor 2MR, the directional selector valve 173 for the turning hydraulic motor 2A, the directional selector valve 174 for the bucket cylinder 9, the directional selector valve 175 for the boom cylinder 7, the directional selector valve 176 for the arm cylinder 8, etc. The solenoid valve 65 is configured to adjust the flow path area of the pipeline connecting the pilot pump 15 and the boom raising-side pilot port of the directional selector valve 175. The solenoid valve 66 is configured to adjust the flow path area of the pipeline connecting the pilot pump 15 and the boom lowering pilot port of the directional selector valve 175.

When a manual operation is performed, the controller 30 generates a boom raising operation signal (electrical signal) or boom lowering operation signal (electrical signal) according to the operation signal (electrical signal) output by an operation signal generating part of the right operation lever 26R. The operation signal output by the operation signal generating part of the right operation lever 26R is an electrical signal that varies according to the operation direction and amount of operation of the right operation lever 26R.

Specifically, when the right operation lever 26R is operated in the boom raising direction, the controller 30 outputs a boom raising operation signal (electrical signal) corresponding to the lever operation amount to the solenoid valve 65. The solenoid valve 65 adjusts the flow path area in response to the boom raising operation signal (electrical signal) and controls the pilot pressure acting on the boom raising side pilot port of the directional selector valve 175 as a boom raising operation signal (pressure signal). Similarly, when the right operation lever 26R is operated in the boom lowering direction, the controller 30 outputs a boom lowering operation signal (electrical signal) corresponding to the amount of lever operation to the solenoid valve 66. The solenoid valve 66 adjusts the flow path area in response to the boom lowering operation signal (electrical signal) and controls pilot pressure acting on the boom lowering side pilot port of the directional selector valve 175 as a boom lowering operation signal (pressure signal).

When executing an autonomous control function, the controller 30 generates a boom raising operation signal (electrical signal) or boom lowering operation signal (electrical signal) in response to an autonomous control signal (electrical signal), instead of responding to the operation signal (electrical signal) output by the operation signal generating part of the right operation lever 26R, for example. The autonomous control function is a function for operating the excavator 100 autonomously and includes, for example, a function for operating the hydraulic actuator autonomously regardless of the operation contents input to the operation device 26 by the operator. The autonomous control signal may be an electrical signal generated by the controller 30 or an electrical signal generated by an external controller or the like other than the controller 30. When the autonomous control function is performed, the control part 30b, in lowering the rotation speed of the engine 11 before the low-load operation of the excavation attachment AT is started, does not need to anticipate whether the low-load operation will be performed to determine when to lower the rotation speed. This is because the control part 30b can recognize in advance when the low-load operation is to be started. Therefore, the control part 30b can reduce the rotation speed of the engine 11 at a desired timing before the low-load operation is started.

Further, in the above described embodiment, the control part 30b is configured to typically perform rotation speed reduction processing when the ECO mode is ON and not perform rotation speed reduction processing when the ECO mode is OFF. The ECO mode is defined as one of the work modes of the excavator 100. However, the ECO mode may be multiple selectable ECO modes such as first and second ECO modes. In this case, the rotation speed reduction process in FIG. 3 may be performed only when, for example, the first ECO mode is ON. The rotation speed reduction process in FIG. 5 may be executed only when, for example, the second ECO mode is ON.

Further, the reduction in the rotation speed of the engine 11 according to the rotation speed reduction process is typically implemented before the operation of the soil discharging process is started, when performing loading work to load soil into the dump truck. However, the reduction in the rotation speed of the engine 11 according to the rotation speed reduction process is not implemented only when loading work is being performed, but also when other work is being performed.

Further, in the above embodiment, a hydraulic operation system is adopted, and the controller 30 is configured to detect the operation contents of the operation device 26 by the operator based on the output of the operation pressure sensor 29. However, if an electric operation system as illustrated in FIG. 7 is adopted, the controller 30 may be configured to detect the operation contents of the operation device 26 by the operator based on the operation signal or an autonomous control signal generated by the operation signal generating part. In this case, the transition of the boom-raising pilot pressure Pu in each of FIGS. 4 and 6 is replaced by, for example, the transition of the operation signal related to the boom-raising. The operation signal is, for example, a digital value such as a current value supplied to the solenoid valve 65 or a tilt angle value representing the tilt of the right operation lever 26R. The same applies to the boom lowering pilot pressure Pd.

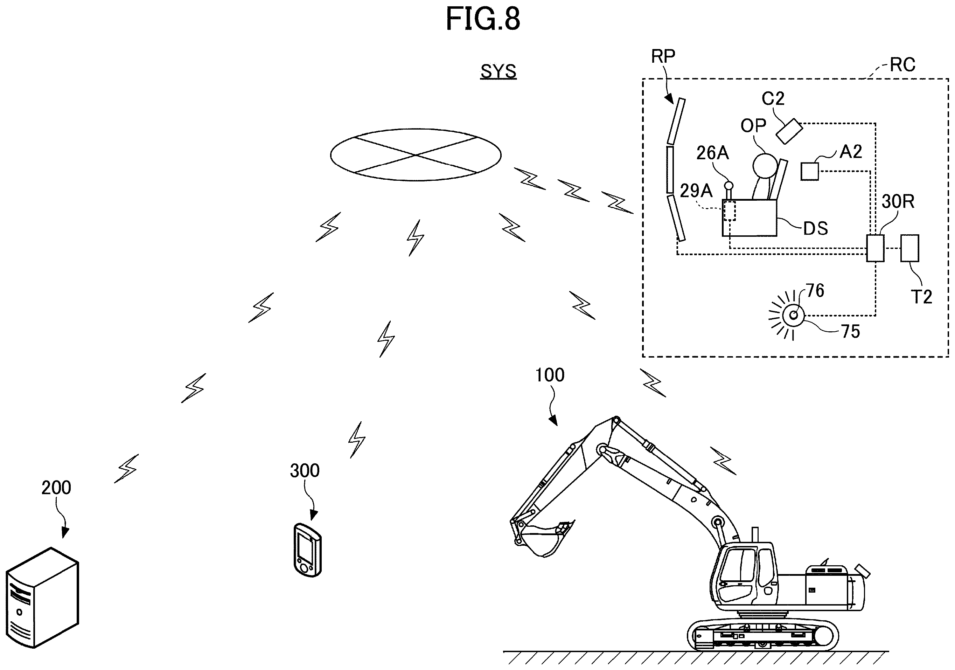

Further, in the above embodiment, the excavator 100 is configured to be operated by an operator seated in the driver's seat in the cabin 10. However, the excavator 100 may be a remotely operated excavator. FIG. 8 is a schematic illustrating an example of a work system SYS that includes the excavator 100 as a remotely operated excavator. As illustrated in FIG. 8, the work system SYS includes the excavator 100, a management device 200, and a support device 300. The work system SYS is configured to support construction work with one or more excavators 100.

The information acquired by the excavator 100 may be shared with a manager and other excavator operators, etc., through the work system SYS. Each of the excavators 100, the management device 200, and the support device 300 that constitute the execution system SYS may be one or more. In the example illustrated in FIG. 8, the work system SYS includes one excavator 100, one management device 200, and one support device 300.

The management device 200 is typically a fixed terminal device, for example, a server computer (what is referred to as a cloud server) installed in a management center or the like outside a work site. The management device 200 may be, for example, an edge server set at a work site. The management device 200 may also be a portable terminal device (for example, a laptop computer terminal, a tablet terminal, or a mobile terminal such as a smartphone).

The support device 300 is typically a portable terminal device, such as a laptop type computer terminal, a tablet terminal, or a smart phone carried by a worker at the work site. The support device 300 may be a portable terminal carried by the operator of the excavator 100. The support device 300 may be a fixed terminal device.

At least one of the management device 200 and the support device 300 may be provided with a monitor and an operation device for remote operation. In this case, the operator using the management device 200 or the support device 300 may operate the excavator 100 while using the remote operation device. The operation device for remote control is communicatively connected to the controller 30 mounted on the excavator 100 through, for example, a wireless communication network such as a short-range wireless communication network, a mobile telephone communication network, or a satellite communication network. The operation device for remote control may be configured to communicate directly with the controller 30 mounted on the excavator 100.

Further, various information images (for example, image information indicating the surroundings of the excavator 100, various setting screens, etc.) displayed on the display device D1 installed in the cabin 10 may be displayed by a display device connected to at least one of the management device 200 and the support device 300. Image information indicating the surroundings of the excavator 100 may be generated based on an image captured by the imaging device (e.g., a camera as the space recognition device 70). Thus, the manager using the management device 200 or the operator using the support device 300 can remotely operate the excavator 100 or make various settings related to the excavator 100 while checking the surroundings of the excavator 100.

For example, in the work system SYS, the controller 30 of the excavator 100 may transmit various kinds of information to at least one of the management device 200 and the support device 300. In this case, the controller 30 may transmit an image captured by the space recognition device 70 to at least one of the management device 200 and the support device 300. Further, the controller 30 may transmit information about at least one of the excavator 100 to at least one of the management device 200 and the support device 300, such as data about the operation of the excavator, data about the posture of the excavator 100, and data about the posture of the excavation attachment. Thus, the manager using the management device 200 or the operator using the support device 300 can obtain information about the excavator 100.

In this way, the work system SYS allows information about the excavator 100 to be shared with the manager and other excavator operators, etc.

As illustrated in FIG. 8, the communication device mounted on the excavator 100 may be configured to transmit and receive information to and from the communication device T2 installed in the remote control room RC via wireless communication. In the example illustrated in FIG. 8, the communication device mounted on the excavator 100 and the communication device T2 are configured to send and receive information via a 5th generation mobile communication line (5G line), an LTE line, a satellite line, etc.

In the remote control room RC, a remote controller 30R, a sound output device A2, an indoor imaging device C2, a display device RP, the communication device T2, etc., are installed. In the remote control room RC, a driver's seat DS where the operator OP who remotely operates the excavator 100 sits is installed.

The remote controller 30R is an arithmetic unit (electronic circuit) that performs various operations. In the example illustrated in FIG. 8, the remote controller 30R, similar to the controller 30, includes a microcomputer including a CPU and memory. The functions of the remote controller 30R are implemented by the CPU executing programs stored in memory.

The sound output device A2 is configured to output sound. In the example illustrated in FIG. 8, the sound output device A2 is a speaker and is configured to reproduce sounds collected by a sound collector (not illustrated) attached to the excavator 100.

The indoor imaging device C2 is configured to capture images of the inside of the remote control room RC. In the example illustrated in FIG. 8, the indoor imaging device C2 is a camera installed inside the remote control room RC and is configured to image the operator OP seated in the driver's seat DS.

The communication device T2 is configured to control wireless communication with the communication device attached to the excavator 100.

In the example illustrated in FIG. 8, the driver's seat DS has a similar structure to the driver's seat installed in the cabin 10 of a regular excavator. Specifically, a left console box is located on the left side of the driver's seat DS, and a right console box is located on the right side of the driver's seat DS. A left control lever is positioned at the top front end of the left console box, and a right control lever is positioned at the top front end of the right console box. A traveling lever and a traveling pedal are arranged in front of the driver's seat DS. Further, the dial 75 is positioned at the top center of the right console box. Each of the left operation lever, the right operation lever, the traveling lever, the traveling pedal, and the dial 75 form the operation device 26A.

The operation device 26A is equipped with an operation sensor 29A for detecting the operation content of the operation device 26A. The operation device 29A is, for example, a tilt sensor that detects the tilt angle of the operation lever or an angle sensor that detects the swing angle of the operation lever around the swing axis. The operation device 29A may include other sensors such as a pressure sensor, a current sensor, a voltage sensor, or a distance sensor. The operation sensor 29A outputs information about the detected operation content of the operation device 26A to the remote controller 30R. The remote controller 30R generates an operation signal based on the received information and transmits the generated operation signal to the excavator 100. The operation sensor 29A may be configured to generate an operation signal. In this case, the operation sensor 29A may output the operation signal to the communication device T2 without going through the remote controller 30R.

The display device RP is configured to display information about the surroundings of the excavator 100. In the example illustrated in FIG. 8, the display device RP is a multi-display including nine monitors with three vertical columns and three horizontal columns, configured to display the state of the space in the front, the left, and the right of the excavator 100. Each monitor is a liquid crystal monitor or an organic EL monitor. However, the display device RP may include one or more curved monitors or a projector.

The display device RP may be a display device wearable by the operator OP. For example, the display device RP is a head-mounted display and may be configured to send and receive information to and from the remote controller 30R by wireless communication. The head-mounted display may be wired to a remote controller. The head-mounted display may be a transmissive head-mounted display or a non-transmissive head-mounted display. The head-mounted display may be a monocular head-mounted display or a binocular head-mounted display.

The display device RP is configured to display an image that enables the operator OP in the remote control room RC to view the surroundings of the excavator 100. That is, the display device RP displays the image so that even though the operator is in the remote control room RC, he or she can check the situation around the excavator 100 as if he or she were in the cabin 10 of the excavator 100.

### [Reference Signs List]

- 1: lower traveling body
- 1C: crawler
- 1CL: left crawler
- 2: turning mechanism
- 2A: turning hydraulic motor
- 2M: traveling hydraulic motor
- 2ML: left traveling hydraulic motor
- 3: upper turning body
- 4: boom
- 5: arm
- 6: bucket
- 7: boom cylinder
- 8: arm cylinder
- 9: bucket cylinder
- 10: cabin
- 11: engine
- 13: regulator
- 14: main pump
- 15: pilot pump
- 17: control valve part
- 18: throttle
- 19: control pressure sensor
- 26, 26A: operation device
- 26D: traveling lever
- 26DL: left traveling lever
- 26DR: right traveling lever
- 26L: left operation lever
- 26R: right operation lever
- 28: discharge pressure sensor
- 29, 29DL, 29DR, 29LA, 29LB, 29RA, 29RB: operation pressure sensor
- 29A: operation sensor
- 30: controller
- 30a: information acquiring part
- 30b: control part
- 30R: remote controller
- 40: center bypass pipeline
- 42: parallel pipeline
- 65, 66: solenoid valve
- 70: space recognition device
- 70F: front sensor
- 70B: rear sensor
- 70L: left sensor
- 100: excavator
- 71: orientation detection device
- 72: information input device
- 73: positioning device
- 75: dial
- 171 to 176: directional selector valve
- 200: management device
- 300: support device
- A2: sound output device
- AT: excavation attachment
- C2: indoor imaging device
- D1: display device
- D2: sound output device
- DS: driver's seat
- OP: operator
- RC: remote control room
- RP: display device
- S1: boom angle sensor
- S2: arm angle sensor
- S3: bucket angle sensor
- S4: machine body tilt sensor
- S5: turning angular velocity sensor
- SYS: work system SYS
- T2: communication device

## Claims

1. An excavator (100) comprising:
a lower traveling body (1);
an upper turning body (3) turnably mounted to the lower traveling body (1);
an attachment (AT) that is attached to the upper turning body (3); and
a power engine (11) that is mounted to the upper turning body (3),
**characterized by**:
a controller (30) configured to determine a low-load operation by the attachment (AT) based on information about a work content of the excavator (100) and reduce a rotation speed of the power engine (11) before the low-load operation by the attachment (AT) is started when the low-load operation is expected to be performed.

2. The excavator (100) according to claim 1, wherein the controller (30) is configured to determine a timing of reducing the rotation speed of the power engine (11) based on an operation content of an operation lever (26L, 26R).

3. The excavator (100) according to claim 2, wherein the controller (30) is configured to reduce the rotation speed of the power engine (11) when the operation lever (26L, 26R) that had been tilted in a predetermined direction is returned toward a neutral position.

4. The excavator (100) according to claim 2, wherein the controller (30) is configured to further reduce the rotation speed of the power engine (11) when an operation of the operation lever (26L, 26R) for implementing the low-load operation is started.

5. The excavator (100) according to claim 1, wherein the controller (30) is configured to reduce the rotation speed of the power engine (11) after excavation and boom raising are performed.

6. The excavator (100) according to claim 1, wherein a range of reduction of the rotation speed of the power engine (11) is set for each target rotation speed.

7. The excavator (100) according to claim 1, wherein a range of reduction of the rotation speed of the power engine (11) is set for each level of target rotation speed.

8. The excavator (100) according to claim 1, wherein a range of reduction of the rotation speed of the power engine (11) is set for each work mode.

9. The excavator (100) according to claim 1, wherein the controller (30) is configured to reduce the rotation speed of the power engine (11) after a high-load operation by the attachment (AT) is performed and before the low-load operation of the attachment (AT) is started.

10. The excavator (100) according to claim 1, wherein the controller (30) is configured to reduce the rotation speed of the power engine (11) to a rotation speed lower than the rotation speed of the power engine (11) before a high-load operation by the attachment (AT) is started.

11. The excavator (100) according to claim 1, wherein the controller (30) is configured to reduce the rotation speed of the power engine (11) to a rotation speed lower than a target rotation speed that is manually set.

12. The excavator (100) according to claim 1, wherein a range of reduction of the rotation speed of the power engine (11) is increased as a target rotation speed that is manually set increases.

13. The excavator (100) according to claim 1, wherein the controller (30) is configured to return the rotation speed of the power engine (11) to an original rotation speed after the low-load operation by the attachment (AT) is performed.

14. The excavator (100) according to claim 1, wherein the excavator (100) is of a remote operation type.

## Patentansprüche

1. Bagger (100) umfassend:
einen unteren Fahrkörper (1);
einen oberen Drehkörper (3), der drehbar an dem unteren Fahrkörper (1) montiert ist;
ein Ansatzstück (AT), das an dem oberen Drehkörper (3) montiert ist; und
einen Antriebsmotor (11), der an dem oberen Drehkörper (3) montiert ist,
**gekennzeichnet durch**:
eine Steuerung (30), die konfiguriert ist, einen Leichtlastbetrieb des Ansatzstücks (AT) auf der Grundlage von Informationen über einen Arbeitsinhalt des Baggers (100) zu bestimmen und eine Drehzahl des Antriebsmotors (11), bevor der Leichtlastbetrieb des Ansatzstücks gestartet wird, (AT) zu reduzieren, wenn erwartet wird, dass der Leichtlastbetrieb durchzuführen ist.

2. Bagger (100) nach Anspruch 1, wobei die Steuerung (30) konfiguriert ist, einen Zeitpunkt zum Verringern der Drehzahl des Antriebsmotors (11) auf der Grundlage eines Bedieninhalts eines Bedienhebels (26L, 26R) zu bestimmen.

3. Bagger (100) nach Anspruch 2, wobei die Steuerung (30) konfiguriert ist, die Drehzahl des Antriebsmotors (11) zu verringern, wenn der Bedienhebel (26L, 26R), der in eine vorbestimmte Richtung geneigt wurde, in eine Neutralstellung zurückkehrt.

4. Bagger (100) nach Anspruch 2, wobei die Steuerung (30) konfiguriert ist, die Drehzahl des Antriebsmotors (11) weiter zu verringern, wenn eine Bedienung des Bedienhebels (26L, 26R) zum Implementieren des Leichtlastbetriebs gestartet wird.

5. Bagger (100) nach Anspruch 1, wobei die Steuerung (30) konfiguriert ist, die Drehzahl des Antriebsmotors (11) zu reduzieren, nachdem Aushub und Auslegeranheben durchgeführt werden.

6. Bagger (100) nach Anspruch 1, wobei für jede Zieldrehzahl ein Bereich von Verringerung der Drehzahl des Antriebsmotors (11) eingestellt ist.

7. Bagger (100) nach Anspruch 1, wobei für jede Stufe von Zieldrehzahl ein Bereich für Verringerung der Drehzahl des Antriebsmotors (11) eingestellt ist.

8. Bagger (100) nach Anspruch 1, wobei für jeden Arbeitsmodus ein Bereich von Verringerung der Drehzahl des Antriebsmotors (11) eingestellt ist.

9. Bagger (100) nach Anspruch 1, wobei die Steuerung (30) konfiguriert ist, die Drehzahl des Antriebsmotors (11), nachdem ein Hochlastbetrieb durch das Ansatzstück (AT) durchgeführt wird und bevor der Leichtlastbetrieb des Ansatzstücks (AT) gestartet wird, zu reduzieren.

10. Bagger (100) nach Anspruch 1, wobei die Steuerung (30) konfiguriert ist, die Drehzahl des Antriebsmotors (11) auf eine Drehzahl, die niedriger ist als die Drehzahl des Antriebsmotors (11), bevor ein Hochlastbetrieb durch das Ansatzstück (AT) gestartet wird, zu reduzieren.

11. Bagger (100) nach Anspruch 1, wobei die Steuerung (30) konfiguriert ist, die Drehzahl des Antriebsmotors (11) auf eine Drehzahl, die niedriger als eine Zieldrehzahl ist, die manuell eingestellt ist, zu reduzieren.

12. Bagger (100) nach Anspruch 1, wobei ein Bereich von Verringerung der Drehzahl des Antriebsmotors (11) vergrößert wird, wenn eine Zieldrehzahl, die manuell eingestellt ist, sich vergrößert.

13. Bagger (100) nach Anspruch 1, wobei die Steuerung (30) konfiguriert ist, die Drehzahl des Antriebsmotors (11) auf eine ursprüngliche Drehzahl zurückzusetzen, nachdem der Leichtlastbetrieb durch das Ansatzstück (AT) durchgeführt wird.

14. Bagger (100) nach Anspruch 1, wobei der Bagger (100) von einem Fernsteuerungs-Typ ist.

## Revendications

1. Une excavatrice (100) comprenant :
un corps de déplacement inférieur (1) ;
un corps de rotation supérieur (3) monté de manière à pouvoir tourner sur le corps de déplacement inférieur (1) ;
un accessoire (AT) qui est fixé au corps de rotation supérieur (3) ; et
un moteur de puissance (11) qui est monté sur le corps de rotation supérieur (3),
**caractérisée par** :
un contrôleur (30) conçu pour déterminer une opération à faible charge par l'accessoire (AT) sur la base d'informations sur un contenu de travail de l'excavatrice (100) et pour réduire la vitesse de rotation du moteur de puissance (11) avant que l'opération à faible charge par l'accessoire (AT) ne soit démarrée, lorsque l'opération à faible charge est prévue d'être effectuée.

2. L'excavatrice (100) selon la revendication 1, dans laquelle le contrôleur (30) est conçu pour déterminer un moment pour réduire la vitesse de rotation du moteur thermique (11) sur la base d'un contenu d'opération d'un levier de commande (26L, 26R).

3. L'excavatrice (100) selon la revendication 2, dans laquelle le contrôleur (30) est conçu pour réduire la vitesse de rotation du moteur de puissance (11) lorsque le levier de commande (26L, 26R) qui avait été incliné dans une direction prédéterminée est ramené vers une position neutre.

4. L'excavatrice (100) selon la revendication 2, dans laquelle le contrôleur (30) est conçu pour réduire davantage la vitesse de rotation du moteur de puissance (11) lorsqu'une opération du levier de commande (26L, 26R) pour mettre en œuvre l'opération à faible charge est démarrée.

5. L'excavatrice (100) selon la revendication 1, dans laquelle le contrôleur (30) est conçu pour réduire la vitesse de rotation du moteur de puissance (11) après que l'excavation et la levée de la flèche ont été effectuées.

6. L'excavatrice (100) selon la revendication 1, dans laquelle une plage de réduction de la vitesse de rotation du moteur de puissance (11) est définie pour chaque vitesse de rotation cible.

7. L'excavatrice (100) selon la revendication 1, dans laquelle une plage de réduction de la vitesse de rotation du moteur de puissance (11) est définie pour chaque niveau de vitesse de rotation cible.

8. L'excavatrice (100) selon la revendication 1, dans laquelle une plage de réduction de la vitesse de rotation du moteur de puissance (11) est définie pour chaque mode de travail.

9. L'excavatrice (100) selon la revendication 1, dans laquelle le contrôleur (30) est conçu pour réduire la vitesse de rotation du moteur de puissance (11) après qu'une opération à forte charge par l'accessoire (AT) a été effectuée et avant que l'opération à faible charge de l'accessoire (AT) ne soit démarrée.

10. L'excavatrice (100) selon la revendication 1, dans laquelle le contrôleur (30) est conçu pour réduire la vitesse de rotation du moteur de puissance (11) à une vitesse de rotation inférieure à la vitesse de rotation du moteur de puissance (11) avant qu'une opération à forte charge par l'accessoire (AT) ne soit démarrée.

11. L'excavatrice (100) selon la revendication 1, dans laquelle le contrôleur (30) est conçu pour réduire la vitesse de rotation du moteur de puissance (11) à une vitesse de rotation inférieure à une vitesse de rotation cible qui est réglée manuellement.

12. L'excavatrice (100) selon la revendication 1, dans laquelle une plage de réduction de la vitesse de rotation du moteur de puissance (11) est augmentée à mesure qu'une vitesse de rotation cible réglée manuellement augmente.

13. L'excavatrice (100) selon la revendication 1, dans laquelle le contrôleur (30) est conçu pour ramener la vitesse de rotation du moteur de puissance (11) à une vitesse de rotation d'origine après que l'opération à faible charge par l'accessoire (AT) a été effectuée.

14. L'excavatrice (100) selon la revendication 1, dans laquelle l'excavatrice (100) est de type à commande à distance.
